# EUROPÄISCHE PATENTSCHRIFT

(11) **EP 3 592 482 B1**
(45) Veröffentlichungstag und Bekanntmachung des Hinweises auf die Patenterteilung: **27.04.2022**
(21) Anmeldenummer: 18719413.9
(22) Anmeldetag: 05.03.2018
(51) Int. Cl.: B21D 55/00, F16P 3/04

(54) **FERTIGUNGSANLAGE MIT EINER SCHUTZEINHEIT**
PRODUCTION PLANT HAVING A PROTECTIVE UNIT
INSTALLATION DE FABRICATION DOTÉE D'UNE UNITÉ DE PROTECTION

(30) Priorität: 06.03.2017 AT 501732017
(43) Veröffentlichungstag der Anmeldung: 15.01.2020
(73) Patentinhaber: TRUMPF Maschinen Austria GmbH & Co. KG., 4061 Pasching (AT)
(72) Erfinder: DENKMEIER, Thomas, 4050 Traun (AT)
(74) Vertreter: Burger, Hannes
(86) Internationale Anmeldenummer: PCT/AT2018/060057
(87) Internationale Veröffentlichungsnummer: WO 2018/161101

(56) Entgegenhaltungen:
- WO-A1-2013/015272
- JP-A- H11 300 421
- US-A- 3 186 256

## Beschreibung

Die Erfindung betrifft eine Fertigungsanlage, insbesondere für das Freibiegen von aus Blech zu fertigenden Werkstücken, mit einer Schutzeinheit, welche zumindest ein Schutzelement umfasst und dieses insbesondere zum bedarfsweisen Abdecken von dessen Biegewerkzeug beim Werkzeugwechsel dient.

Aus der WO 2013/015272 A1 ist eine Fertigungsanlage für das Freibiegen von einem aus einem Blech zu fertigenden Werkstück bekannt geworden, welche den Oberbegriff des Anspruchs 1 repräsentiert. Die Fertigungsanlage umfasst eine Abkantpresse mit einem Maschinengestell, einem unteren Pressbalken, einem oberen Pressbalken sowie an den Pressbalken angeordnete oder ausgebildete Werkzeugaufnahmen. Es ist weiters zumindest ein Biegewerkzeug mit mindestens einem Biegestempel und mindestens einem Biegegesenk sowie eine Werkzeug-Manipulationseinheit zum Verbringen des Biegewerkzeugs zwischen den Werkzeugaufnahmen und einem Werkzeugspeicher oder zur Positionsveränderung des Biegewerkzeugs relativ bezüglich der Werkzeugaufnahmen vorgesehen. Weiters umfasst die Fertigungsanlage eine Schutzeinheit mit zumindest einem Schutzelement und einer Verstellvorrichtung. Mittels der Verstellvorrichtung ist das zumindest eine Schutzelement relativ bezüglich der Abkantpresse von einer das Biegewerkzeug zumindest bereichsweise abdeckenden Schutzstellung in eine das Biegewerkzeug zumindest bereichsweise freigebende Freigabestellung verlagerbar. Das zumindest eine Schutzelement ist seinerseits plattenförmig ausgebildet und weist einen ersten Längsrand sowie einen zweiten Längsrand auf. Von den beiden Längsrändem wird eine Breite des Schutzelements definiert. Die Schutzeinheit ist in einem Zufuhrbereich vor der Abkantpresse angeordnet.

Die US 3,186,256 A beschreibt eine Biegemaschine zur Herstellung von Werkstücken oder Werkteilen zwischen zumindest einem relativ zueinander verstellbaren Biegewerkzeug. Das Biegewerkzeug umfasst einen Biegestempel und ein Biegegesenk, welche jeweils an einem Pressbalken gehalten sind. Einer der Pressbalken ist zur Durchführung des Biegevorgangs an einem Maschinengestell in vertikaler Richtung verstellbar geführt. Auf der Bedienerseite und somit auf jener Seite, von welcher das zu biegende Blech zugeführt wird, ist dem Biegewerkzeug ein plattenförmiges Schutzelement vorgeordnet. Zur Befestigung des Schutzelements ist eine Haltestange vorgesehen, welche an seitlich der Pressbalken befindlichen Seitenwangen des Maschinengestells befestigt ist. Die Haltestange ist oberhalb des Schutzelements angeordnet und trägt mehrere Stellelemente, welche zur Vertikalverlagerung des Schutzelements mit diesem verbunden sind. Der Verstellhub der Stellelemente zwischen der Schutzstellung und der Freigabestellung ist durch den relativ kurzen Stellweg der als Elektomagneten ausgebildeten Stellelemente begrenzt. Die Vertikalverstellung des Schutzelements dient dazu, für den beim Biegevorgang hochschwenkenden Teilabschnitt des herzustellenden Werkstücks keine Störkontur auszubilden. Weiters kann damit nicht in allen Betriebsfällen ein ausreichender Freiraum vor dem Biegewerkzeug geschaffen werden.

Eine andere Ausführung eines Schutzelements für eine Biegemaschine zur Herstellung von Werkstücken oder Werkteilen zwischen zumindest einem relativ zueinander verstellbaren Biegewerkzeug ist aus der US 3,969,955 A bekannt geworden. Das Biegewerkzeug umfasst einen Biegestempel und ein Biegegesenk, welche jeweils an einem Pressbalken gehalten sind. Einer der Pressbalken ist zur Durchführung des Biegevorgangs an einem Maschinengestell in vertikaler Richtung verstellbar geführt. Das plattenförmig ausgebildete Schutzelement ist am oberen verstellbaren Pressbalken über zumindest zwei voneinander distanziert angeordneten Scharnieranordnung jeweils an einem Flachprofil mit einem darin angeordneten Langloch gehalten. Die Flachprofile können durch das Vorsehen der jeweils darin angeordneten Langlöcher in vertikaler Richtung relativ bezüglich des oberen Pressbalkens verstellt werden. Zusätzlich kann das Schutzelement bei Bedarf mittels der Scharnieranordnung in Richtung auf die Bedienerseite vorgeschwenkt oder auch hochgeklappt werden. Hier konnte nur ein geringer vertikaler Verstellhub erzielt werden. Auch bei hochgeklapptem Schutzelement konnte kein ausreichender Freiraum ohne Bildung einer Störkontur geschaffen werden.

Eine weitere Ausführung eines Schutzelements für eine Biegemaschine beschreibt die US 4,030,364 A. Der obere Pressbalken ist relativ bezüglich des feststehenden Maschinengestells in vertikaler Richtung verstellbar. Das plattenförmig ausgebildete Schutzelement ist in seiner untersten Lage mittels Halteseilen an einem oberhalb des oberen Pressbalkens feststehend angeordneten Tragelements des Maschinengestells gehalten. In dieser untersten Lage des Schutzelements ist ein in seiner Höhe gering ausgebildeter Zufuhrspalt für das zu biegende Blech vorhanden. Mittels eines mehrfach umgelenkten Seilzugs kann das Schutzelement bei der Abwärtsbewegung des oberen Pressbalkens im Zuge des Biegevorgangs angehoben werden. Ein Ende des Seils des Seilzugs ist mit dem Schutzelement und das andere Ende mit dem Pressbalken fest verbunden. Eine zweifache Umlenkung des Seils des Seilzugs erfolgt am Tragelement, wobei weiters eine zwischen den beiden vorgesehene Umlenkung an der Hinterseite des oberen Pressbalkens erfolgt. Bewegt sich der obere Pressbalken in Richtung auf den unteren Pressbalken wird durch den Seilzug das Schutzelement relativ bezüglich des unteren Pressbalkens angehoben, wodurch sich der zuvor geringe Zufuhrspalt in seiner Höhe vergrößert. Dabei ist nachteilig, dass eine Verstellbewegung des Schutzelements nur bei einer Verstellung des oberen Pressbalkens möglich ist und die Verstellbewegung des Schutzelements vom Verstellhub des oberen Pressbalkens abhängig ist. Darüber hinaus ist die Seilzuganordnung aufwändig und im Betrieb nicht immer ganz zuverlässig.

Die JPH 11-300421 beschreibt eine weitere Ausbildung einer Schutzvorrichtung mit einem plattenförmigen Schutzelement für eine Biegemaschine. Im Bereich von feststehenden Seitenwangen des Maschinengestells ist jeweils ein Seilzug zur Höhenverstellung des Schutzelements vorgesehen. Jeder der Seilzüge verläuft ausgehend vom Schutzelement in vertikaler Richtung zu einer ersten Umlenkrolle, von dieser zu einer im Bereich der Hinterseite der Seitenwangen befindlichen zweiten Umlenkrolle und von dieser zu einem durch eine Zylinder-Kolbenanordnung gebildeten Stellelement. Der mögliche Verstellweg des Schutzelements ist vom Verstellhub der Stellelemente festgelegt. Nachteilig dabei ist die labile Anordnung des Schutzelements in all seinen Stellungen.

Eine andere, in vertikaler Richtung an einer Anlage verstellbare Schutzvorrichtung ist aus der JPH 06-34736 U bekannt geworden. Im Bereich von beiden Längsenden der Schutzvorrichtung ist oberhalb derselben jeweils eine angetriebene Rolle angeordnet. Um jede der Rollen ist ein Zugseil gewickelt, wobei jeweils ein erstes Ende des Zugseils mit der Schutzvorrichtung und jeweils ein zweites Ende mit einem Gegengewicht verbunden ist. Durch das auf die beiden Rollen aufgebrachte Antriebsmoment und mittels Unterstützung des Gegengewichts kann die Schutzvorrichtung einfach in vertikaler Richtung von ihrer Schutzstellung in die Freigabestellung verstellt werden. Dazu sind mehrere Anlagenkomponenten für den Verstellmechanismus vorzusehen, wobei aufgrund des Seilzugs eine labile Anordnung des Stützelements vorliegt und weiters Störkonturen geschaffen werden.

Aufgabe der vorliegenden Erfindung war es, die Nachteile des Standes der Technik zu überwinden und eine Vorrichtung zur Verfügung zu stellen, mittels derer es möglich ist, eine sichere und einfache Abdeckung des Gefahrenbereichs beim Werkzeugwechsel zu ermöglichen und in der Freigabestellung des Schutzelements keine Störkontur bei der Durchführung des Biegevorgangs auszubilden.

Diese Aufgabe wird durch eine Fertigungsanlage, insbesondere mit der dafür vorgesehenen Schutzeinheit, gemäß den Ansprüchen gelöst.

Der erfindungsgemäße Fertigungsanlage kann insbesondere für das Freibiegen oder Prägebiegen von einem aus einem Blech zu fertigenden Werkstück dienen, und folgende Anlagenkomponenten umfassen:
- eine Biegepresse, insbesondere Abkantpresse, mit einem Maschinengestell, einem unteren Pressbalken, einem oberen Pressbalken sowie an den Pressbalken angeordneten oder ausgebildeten Werkzeugaufnahmen,
- zumindest ein Biegewerkzeug mit mindestens einem Biegestempel und mindestens einem Biegegesenk,
- eine Werkzeug-Manipulationseinheit zum Verbringen des Biegewerkzeugs zwischen den Werkzeugaufnahmen und einem Werkzeugspeicher oder zur Positionsveränderung des Biegewerkzeugs relativ bezüglich der Werkzeugaufnahmen, und
- eine Schutzeinheit mit zumindest einem Schutzelement und einer Verstellvorrichtung, mittels welcher Verstellvorrichtung das zumindest eine Schutzelement relativ bezüglich der Biegepresse von einer das Biegewerkzeug zumindest bereichsweise abdeckenden Schutzstellung in eine das Biegewerkzeug zumindest bereichsweise freigebende Freigabestellung verlagerbar ist, und das zumindest eine Schutzelement plattenförmig ausgebildet ist und einen ersten Längsrand sowie eine zweiten Längsrand aufweist und von den beiden Längsrändern eine Breite des Schutzelements definiert ist, und wobei die Schutzeinheit in einem Zufuhrbereich vor der Biegepresse angeordnet ist.

Bei der ersten Ausbildung der Schutzeinheit ist vorgesehen, dass die Verstellvorrichtung zumindest zwei Konsolen und zumindest zwei Haltearme mit jeweils einem ersten Endbereich und einem zweiten Endbereich umfasst, und die Haltearme jeweils mit ihren ersten Endbereichen an den Konsolen gelenkig gelagert sind und die Haltearme jeweils mit ihren zweiten Endbereichen mit dem zumindest einen Schutzelement an seinem vom unteren Pressbalken abgewendeten ersten Längsrand gelenkig verbunden sind, und die zumindest zwei Konsolen in Richtung der Längserstreckung des zumindest einen Schutzelements voneinander distanziert angeordnet sind.

Bei der weiteren Ausbildung der Schutzeinheit ist vorgesehen, dass die Verstellvorrichtung zumindest zwei Linearführungsanordnungen umfasst, und jede der Linearführungsanordnungen eine erste Führungsschiene und eine zweite Führungsschiene und zumindest eine weitere Führungsschiene umfasst, und die ersten Führungsschienen jeweils ortsfest an der Biegepresse angeordnet sind, und jeweils die zumindest eine weitere Führungsschiene am zumindest einen Schutzelement befestigt ist, und die zumindest zwei Linearführungsanordnungen in Richtung der Längserstreckung des zumindest einen Schutzelements voneinander distanziert angeordnet sind.

Der dadurch erzielte Vorteil liegt darin, dass je nach Wahl der Verstellvorrichtung ein ausreichend langer Verstellweg für das zumindest eine Schutzelement zwischen seiner Schutzstellung und seiner Freigabestellung zur Verfügung gestellt wird. Damit wird für die Schutzstellung eine sichere Abdeckung im Frontbereich zwischen den geöffneten Pressbalken mit dem daran angeordneten Biegewerkzeug erzielt. Wird das zumindest eine Schutzelement in seine Freigabestellung verstellt, wird dieses aufgrund des ausreichend lang gewählten Verstellwegs soweit von dem an den Pressbalken gehaltenen Biegewerkzeug verstellt, dass vom Schutzelement keine Störkontur für die Durchführung von Biegevorgängen ausgebildet wird.

Durch das Vorsehen der Konsolen als Lagerbasis und der gelenkig daran gehaltenen Haltearme oder Hebelarme wird so beim Hochschwenken des Schutzelements von der Schutzstellung in die Freigabestellung ein von der Längserstreckung der Haltearme definierter Verstellweg bereitgestellt, mit welchem das zumindest eine Schutzelement aus dem Arbeitsbereich wegverstellbar ist. Weiters wird damit noch eine bevorzugt in allen Betriebslagen hängende Anordnung des zumindest einen Schutzelements an den jeweiligen Haltearmen erzielt.

Auch bei der weiteren Ausbildung der Verstellvorrichtung in Form von Linearführungsanordnungen umfassend jeweils mehrere Führungsschienen, wird so eine platzsparende Verstellvorrichtung geschaffen, bei welcher eine geradlinige Verstellbewegung, insbesondere mittels einer Teleskopführung, ermöglicht wird. Durch das Vorsehen mehrerer Führungsschienen wird so ausgehend von der Freigabestellung hin in die Schutzstellung und retour ebenfalls ein ausreichend langer Verstellweg geschaffen, um so wiederum einerseits eine sichere Abdeckung des Biegewerkzeuges beim Werkzeugwechsel und andererseits keine Störkontur bei sich in der Freigabestellung befindlichen Schutzelement während des Biegevorgangs auszubilden.

Eine weitere mögliche Ausbildung sieht vor, dass die Schutzeinheit, insbesondere deren Konsolen oder deren ersten Führungsschienen, am oberen Pressbalken gehalten ist. Dadurch, dass die gesamte Schutzeinheit mitfahrend am oberen Pressbalken gehalten ist, wird so auch stets die gesamte Schutzeinheit mitbewegt und der Relativabstand in der Freigabestellung zwischen dem oberen Pressbalken und der Schutzeinheit, insbesondere dem Schutzelement, gleich gehalten. Ist so einmal die relative Lage in der Freigabestellung festgelegt, wird bei nachfolgenden Biegevorgängen auch keine näherliegende Störkontur mehr geschaffen.

Weiters kann es vorteilhaft sein, wenn die Breite des zumindest einen Schutzelements zwischen seinen beiden Längsrändern einer Öffnungsweite zwischen den Werkzeugaufnahmen bei vollständig geöffnetem Biegewerkzeug entspricht. Damit kann eine sichere Abdeckung des Gefahrenbereichs während des Werkzeugwechsels erzielt werden. Weiters kann damit aber auch die Bauhöhe bzw. Breite des Schutzelements so gering wie möglich gehalten werden.

Eine andere Ausführungsform zeichnet sich dadurch aus, dass die zumindest zwei Haltearme zwischen der Schutzstellung und der Freigabestellung des zumindest einen Schutzelements jeweils um einen Schwenkwinkel mit einem Wert ausgewählt aus einem Winkelbereich mit einer unteren Grenze von 150° und einer oberen Grenze von 200°, insbesondere 180°, verschwenkbar sind. Durch das Vorsehen eines ausreichend großen Verschwenkwinkels der Haltearme kann einerseits eine platzsparende Anordnung der Verstellvorrichtung sowohl in der Schutzstellung als auch in der Freigabestellung geschaffen werden und andererseits eine möglichst weite Distanzierung des Schutzelements vom Biegebereich in der Freigabestellung erzielt werden.

Eine weitere mögliche Ausführungsform hat die Merkmale, dass eine Längserstreckung der Haltearme jeweils in etwa der Breite des zumindest einen Schutzelements zwischen seinen beiden Längsrändern entspricht. Damit kann auch bei minimalen Breiten des Schutzelements ein ausreichender Verstellweg erzielt werden und trotzdem eine kompakte Baueinheit geschaffen werden.

Eine weitere Ausbildung sieht vor, dass die Haltearme in der Freigabestellung jeweils ausgehend von den Konsolen auf die vom unteren Pressbalken abgewendete Seite ragen und das zumindest eine Schutzelement auf der vom oberen Pressbalken abgewendeten Seite der Haltearme sowie in Richtung auf den unteren Pressbalken hängend angeordnet ist. Durch die hochgeschwenkten Haltearme und die an diesen hängende Anordnung des zumindest einen Schutzelements kann so eine platzsparende Anordnung der Schutzeinheit in der hochgeschwenkten Freigabestellung erzielt werden.

Eine andere Ausführungsform zeichnet sich dadurch aus, dass in der Schutzstellung sowohl die Haltearme ausgehend von den Konsolen als auch das zumindest eine an den Haltearmen gelenkig verbundene Schutzelement eine in Richtung auf den unteren Pressbalken hängende Anordnung aufweisen Damit kann eine Lageänderung des Schutzelements zwischen seiner Freigabestellung und seiner Schutzstellung um die doppelte Längserstreckung der Haltearme erzielt werden.

Eine weitere bevorzugte Ausführungsform ist dadurch gekennzeichnet, dass die Konsolen derart am oberen Pressbalken angeordnet sind, dass in der Schutzstellung und bei vollständig geöffnetem Biegewerkzeug der zweite Längsrand des zumindest einen Schutzelements dem unteren Pressbalken zugewendet ist, und sich das zumindest eine Schutzelement mit seinem zweiten Längsrand zumindest bis an die untere Werkzeugaufnahme erstreckt. Damit kann einerseits in der Schutzstellung eine sichere Abdeckung auch bei geöffnetem Biegewerkzeug und andererseits eine ausreichend weite Distanzierung in der Freigabestellung erzielt werden.

Weiters kann es vorteilhaft sein, wenn die zumindest zwei Konsolen in einem oberen Endabschnitt des oberen Pressbalkens angeordnet sind. Unter oberer Endabschnitt oder Endbereich des Pressbalkens wird verstanden, dass die Konsolen in jenem Bereich angeordnet sind, welcher weiter vom unteren Pressbalken distanziert ist. Damit wird die Möglichkeit geschaffen, das zumindest eine Schutzelement in seiner Freigabestellung in einem eher großen Abstand vom Biegewerkzeug anzuordnen. So kann die vom Schutzelement gebildete Störkontur sehr weit weg vom Biegebereich des Blechs angeordnet werden. Weiters wird so auch noch auf der Bedienseite oder Zufuhrseite ein ausreichender Freiraum ohne Einschränkung durch das Schutzelement ausgebildet.

Eine andere alternative Ausführungsform zeichnet sich dadurch aus, dass zumindest eine Stell- und/oder Dämpfungsvorrichtung vorgesehen ist, welche zumindest eine Stell- und/oder Dämpfungsvorrichtung mit einem der Haltearme wirkverbunden ist. Durch das Vorsehen zumindest einer Stell- und/oder Dämpfungsvorrichtung kann so eine kontrollierte Schwenkbewegung des oder der Haltearme erzielt werden. Darüber hinaus kann so aber auch eine Erleichterung der Rückstellbewegung von der Schutzstellung in die Freigabestellung bei einer manuellen Verstellung durch den Bediener erzielt werden. Mittels der Stellvorrichtung kann aber auch noch ein Gewichtsausgleich und eine damit verbundene Gewichtskompensation erzielt werden. Durch die Dämpfungsvorrichtung kann die Abwärtsbewegung des oder der Haltearme von der nach oben ragenden in die nach unten ragende Stellung verzögert werden. Damit kann eine kontrollierte Abwärtsbewegung der Haltearme mitsamt dem daran gehaltenen Schutzelement erreicht werden.

Eine weitere Ausbildung sieht vor, dass ein maximaler Verstellweg der zumindest zwei Linearführungsanordnungen derart gewählt ist, dass in der Schutzstellung und bei vollständig geöffnetem Biegewerkzeug der zweite Längsrand des zumindest einen Schutzelements dem unteren Pressbalken zugewendet ist, und sich das zumindest eine Schutzelement mit seinem zweiten Längsrand zumindest bis an die untere Werkzeugaufnahme erstreckt. Durch die Wahl des maximalen Verstellwegs kann so ein exakt vordefinierter Betriebszustand der Schutzeinheit in jeder ihrer Stellungen erzielt werden. Weiters kann damit aber auch in der Schutzstellung eine sichere Abdeckung gewährleistet werden, wobei in der Freigabestellung durch das mehrfache Vorsehen der Führungsschienen das Schutzelement weit genug vom Biegebereich des Biegewerkzeugs wegverstellt werden kann und so von diesem keine Störkontur mehr ausgebildet wird.

Eine weitere mögliche und gegebenenfalls alternative Ausführungsform hat die Merkmale, dass die zumindest zwei Linearführungsanordnungen in vertikaler Ausrichtung am oberen Pressbalken gehalten sind. Dadurch kann eine exakte geradlinige Verstellbewegung zwischen der Schutzstellung und der Freigabestellung erzielt werden. Durch das ständige Mitbewegen der gesamten Schutzeinheit mit dem oberen Pressbalken kann der Relativabstand in der Freigabestellung zwischen dem oberen Pressbalken und der Schutzeinheit, insbesondere dem Schutzelement, stets gleich gehalten werden. Ist so einmal die relative Lage in der Freigabestellung festgelegt, wird bei nachfolgenden Biegevorgängen auch keine näherliegende Störkontur mehr geschaffen.

Eine andere Ausführungsform zeichnet sich dadurch aus, dass bei zumindest einer der Linearführungsanordnungen zumindest ein Antriebselement vorgesehen ist. Durch das Vorsehen zumindest eines Antriebselements kann eine kontrollierte Verstellbewegung beim Verstellvorgang von der Freigabestellung hin zur Schutzstellung und/oder von der Schutzstellung hin zur Freigabestellung erzielt werden.

Eine weitere bevorzugte Ausführungsform ist dadurch gekennzeichnet, dass eines der Antriebselemente zwischen der ersten Führungsschiene und der zweiten Führungsschiene vorgesehen ist. Dadurch kann eine exakt vorbestimmte Verstellbewegung zwischen den ersten beiden Führungsschienen erzielt werden.

Weiters kann es vorteilhaft sein, wenn eines der Antriebselemente zwischen der zweiten Führungsschiene und der zumindest einen weiteren Führungsschiene vorgesehen ist. Damit kann eine gleichmäßige Verstellbewegung zwischen den einzelnen Führungsschienen sichergestellt werden.

Schließlich zeichnet sich eine andere Ausführungsform dadurch aus, dass zumindest eine Stell- und/oder Dämpfungsvorrichtung vorgesehen ist, welche zumindest einer Stell- und/oder Dämpfungsvorrichtung mit dem zumindest einen Schutzelement wirkverbunden ist. Durch das Vorsehen zumindest einer Stell- und/oder Dämpfungsvorrichtung kann so eine kontrollierte Schwenkbewegung des oder der Haltearme erzielt werden. Darüber hinaus kann so aber auch eine Erleichterung der Rückstellbewegung von der Schutzstellung in die Freigabestellung bei einer manuellen Verstellung durch den Bediener erzielt werden. Mittels der Stellvorrichtung kann aber auch noch ein Gewichtsausgleich und eine damit verbundene Gewichtskompensation erzielt werden. Durch die Dämpfungsvorrichtung kann die Abwärtsbewegung des oder der Haltearme von der nach oben ragenden in die nach unten ragende Stellung verzögert werden. Damit kann eine kontrollierte Abwärtsbewegung der Haltearme mitsamt dem daran gehaltenen Schutzelement erreicht werden.

Zum besseren Verständnis der Erfindung wird diese anhand der nachfolgenden Figuren näher erläutert.

Es zeigen jeweils in stark vereinfachter, schematischer Darstellung:
- Fig. 1: eine Fertigungsanlage mit einer Biegepresse und schematisch angedeuteter Schutzeinheit, in Frontansicht;
- Fig. 2: die Fertigungsanlage nach Fig. 1, in Seitenansicht;
- Fig. 3: eine erste mögliche Ausbildung der Schutzeinheit in deren Schutzstellung, mit angedeuteter Biegepresse, in Frontansicht und schematisierter Darstellung;
- Fig. 4: die Schutzeinheit nach Fig. 3 in deren Schutzstellung, in Seitenansicht;
- Fig. 5: die Schutzeinheit nach Fig. 3, jedoch in deren Freigabestellung, in Seitenansicht;
- Fig. 6: eine weitere mögliche Ausbildung der Schutzeinheit in deren Schutzstellung, mit angedeuteter Biegepresse, in Frontansicht und schematisierter Darstellung;
- Fig. 7: die Schutzeinheit nach Fig. 6 in Draufsicht auf die Verstellvorrichtung.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

Der Begriff "insbesondere" wird nachfolgend so verstanden, dass es sich dabei um eine mögliche speziellere Ausbildung oder nähere Spezifizierung eines Gegenstands oder eines Verfahrensschritts handeln kann, aber nicht unbedingt eine zwingende, bevorzugte Ausführungsform desselben oder eine Vorgehensweise darstellen muss.

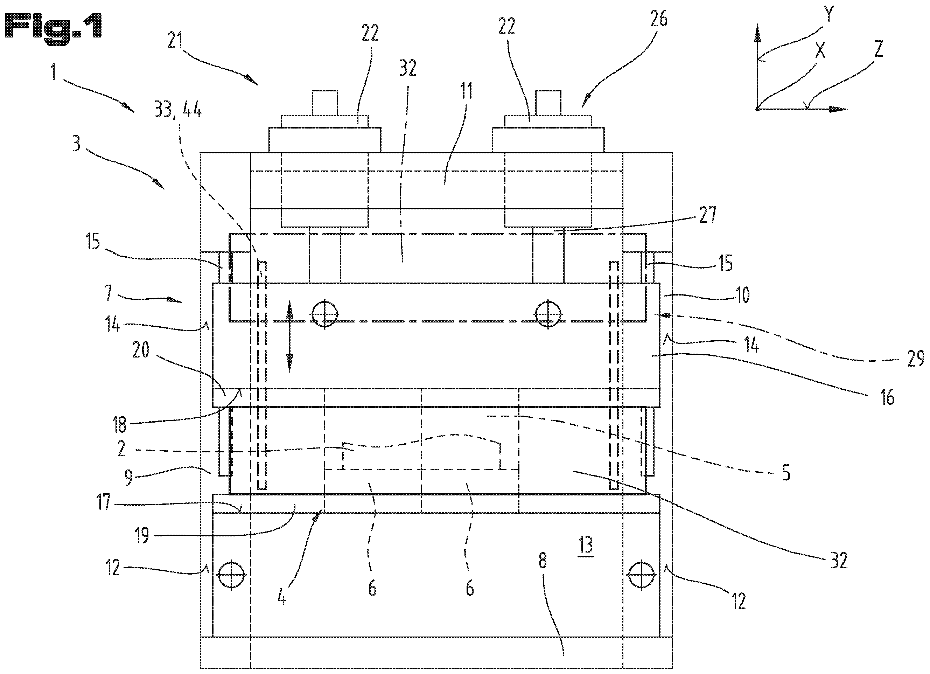

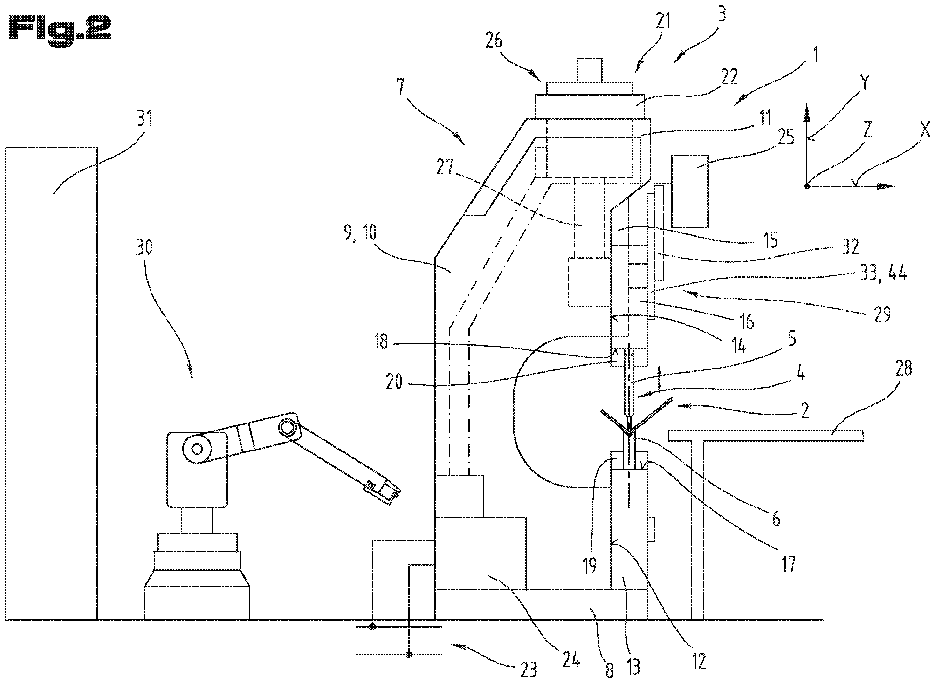

In den Fig. 1 und 2 ist eine Fertigungsanlage 1 in stark schematisch vereinfachter Darstellung gezeigt, welche im vorliegenden Fall insbesondere für das Freibiegen von aus Blech zu fertigenden Werkstücken 2 mittels Gesenkbiegen ausgebildet ist.

Die im vorliegenden Fall für das Biegen eingesetzte Fertigungsanlage 1 umfasst eine Biegemaschine, im vorliegenden Ausführungsbeispiel eine Biegepresse 3, insbesondere eine Abkantpresse oder Gesenkbiegepresse, zur Herstellung der Werkstücke 2 oder Werkteile zwischen zumindest einem relativ zueinander verstellbaren Biegewerkzeug 4. Das Biegewerkzeug 4 umfasst im vorliegenden Ausführungsbeispiel zumindest einen Biegestempel 5, zumeist jedoch mehrere Biegestempel 5, und zumindest ein Biegegesenk 6, zumeist jedoch mehrere damit zusammenwirkende Biegegesenke 6. Der zumindest eine Biegestempel 5 ist dabei oberhalb des zu fertigenden Werkstücks 2 an der Biegepresse 3 angeordnet und dort auch entsprechend gehalten, insbesondere geklemmt. Auch das zumindest eine Biegegesenk 6 ist an der Biegepresse 3 gehalten, insbesondere daran geklemmt gehalten.

Als Koordinatensystem wird bei derartigen Biegepressen 3 grundsätzliches als "X"-Richtung jene bezeichnet, welche in einer Horizontalebene sowie in senkrechter Ausrichtung bezüglich der Längserstreckung des Biegewerkzeugs 4, insbesondere dessen Biegestempel 5 sowie Biegegesenk 6 verläuft. Somit ist dies jene Richtung, welche auch der Zufuhrrichtung oder der Entnahmerichtung entspricht. Als "Y"-Richtung wird die Vertikalrichtung verstanden, welche somit in Höhenrichtung des Biegewerkzeugs 4 und weiters in senkrechter Richtung bezüglich der Horizontalebene verläuft. Schließlich wird als "Z"-Richtung jene Richtung verstanden, welche in Längsrichtung bzw. in der Längserstreckung des Biegewerkzeugs 4, insbesondere dessen Biegestempel 5 sowie Biegegesenk 6, verläuft. Damit ist auch die Längserstreckung der vom Biegewerkzeug 4 definierten Biegekante in der "Z"-Richtung verlaufend ausgerichtet.

Ein Maschinengestell 7 der Biegepresse 3 umfasst beispielsweise eine Bodenplatte 8, auf der vertikal aufragend, zueinander in Querrichtung beabstandet und parallel zueinander ausgerichtete Seitenwangen 9, 10 angeordnet sind. Diese sind bevorzugt durch einen massiven, beispielsweise aus einem Blechformteil gebildeten Querverband 11 an ihren von der Bodenplatte 8 distanzierten Endbereichen miteinander verbunden.

Die Seitenwangen 9, 10 können zur Bildung eines Freiraums für das Umformen des Werkstücks 2 etwa C - förmig ausgebildet sein, wobei an Frontstirnflächen 12 von bodennahen Schenkeln der Seitenwangen 9, 10 ein feststehender, insbesondere auf der Bodenplatte 8 aufstehender, erster Pressbalken 13 oder unterer Pressbalken 13 befestigt ist. Dieser ortsfest angeordnete und feststehende Pressbalken 13 kann auch als Presstisch bezeichnet werden, an welchem Teile des Biegewerkzeugs 4 angeordnet und auch gehalten sind. An Frontstirnflächen 14 von von der Bodenplatte 8 entfernten Schenkeln ist in Linearführungen 15 ein zu dem den Tischbalken bildenden Pressbalken 13 relativ verstellbarer weiterer Pressbalken 16, insbesondere ein Druckbalken, geführt gelagert. Der Pressbalken 16 kann auch als zweiter Pressbalken oder oberer Pressbalken aber auch als Druckbalken bezeichnet werden.

Auf einander gegenüberliegenden, parallel zueinander verlaufenden Stirnflächen 17, 18 der beiden Pressbalken 13, 16 können Werkzeugaufnahmen 19, 20 zur Bestückung mit dem oder den Biegewerkzeugen 4 angeordnet sein. Das oder die Biegewerkzeuge 4 können auch unter Zwischenschaltung eines nicht näher dargestellten Adapters an den Werkzeugaufnahmen 19, 20 gehalten sein, wobei dies für einen Wechselvorgang einzelner Komponenten oder des gesamten Biegewerkzeugs 4 eher als nicht günstig angesehen wird, jedoch auch eine Möglichkeit darstellen kann.

Die gezeigte Biegepresse 3 weist als Antriebsanordnung 21 für den verstellbaren Pressbalken 16, nämlich den Druckbalken, z.B. zwei mit elektrischer Energie betriebene Antriebsmittel 22 auf, die mit einer aus einem Energienetz 23 angespeisten Steuervorrichtung 24 leitungsverbunden sind. Über ein mit der Steuervorrichtung 24 kommunikationsverbundenes Eingabeterminal 25 kann beispielsweise der Betrieb der Biegepresse 3, insbesondere auch der Wechselvorgang des Biegewerkzeugs 4, gesteuert werden.

Bei den Antriebsmitteln 22 kann es sich z.B. um elektromotorische Spindeltriebe 26 handeln, wie sie allgemein bekannt sind, von denen Stellmittel 27 für eine reversible Stellbewegung des durch den Druckbalken gebildeten oberen Pressbalkens 16 mit diesem, zum Beispiel antriebsverbunden sind. Unabhängig davon wäre es aber auch noch möglich, das oder die Antriebsmittel 22 durch hydraulisch und/oder pneumatisch betätigbare Stellmittel zu bilden. Dabei können Zylinder-Kolbenanordnungen Anwendung finden. Es wären aber auch andere Antriebsmittel, wie z.B. Exzenterantriebe, Kniehebelantriebe, Zahnstangenantriebe usw. denkbar.

Auf weitere für den Betrieb einer derartigen Biegepresse 3 erforderliche Details, wie beispielsweise Zufuhrvorrichtungen und/oder Kontrollvorrichtungen, wird in der gegenständlichen Beschreibung zur Vermeidung einer unnötigen Länge der Beschreibung verzichtet.

Zur Auflage und Abstützung des zu biegenden Blechs kann im vorderen Bereich - also dem Zufuhrbereich - der Biegepresse ein Auflagetisch 28 vorgesehen oder angeordnet sein. Der Auflagetisch 28 ist nur teilweise dargestellt und bildet eine Auflageebene für das zu biegende Blech aus.

Weiters kann die Fertigungsanlage 1 auch noch einen hier nicht näher dargestellten Manipulator umfassen, welcher von einem Vorratsstapel von zu verformenden bzw. abzukantenden Blechen zumindest ein Stück davon entnimmt und in den Arbeitsbereich bzw. die Bedienseite der Biegepresse 3 verbringt.

Der Manipulator kann seinerseits eine Greifzange umfassen, die ihrerseits Greiffinger aufweist. Die Greiffinger weisen an der dem zu fertigenden Werkstück 2 zugewendeten Seite jeweils Klemmflächen auf. Durch eine entsprechende Verschwenkung der beiden Greiffinger gegeneinander und dem Aufbringen einer ausreichenden Klemmkraft, wird über das Zusammenwirken der Klemmflächen das Blech bzw. das zu fertigende Werkstück 2 vom Manipulator gehalten und entsprechend bewegt sowie positioniert. Mit den Greiffingern der Greifzange ist ein entsprechendes Greifen und in späterer Folge bedingt durch die Klemmbewegung ein ausreichender Halt für das aus dem Blech zu fertigende Werkstück 2 gewährleistet.

Weiters ist noch angedeutet, dass im Bereich der Bedienseite oder der Zufuhrseite der Biegepresse 3 und somit bedarfsweise vor dem oder den Biegewerkzeugen 4 eine Schutzeinheit 29 angeordnet oder vorgesehen sein kann. Die Schutzeinheit 29 dient dazu, die Öffnungsweite zwischen den Werkzeugaufnahmen 19, 20 bei vollständig geöffnetem Biegewerkzeug 4 im Bereich der Bedienseite oder der Zufuhrseite soweit abzudecken, dass während des Werkzeugwechsels dem Bediener ein unbeabsichtigter Zugriff zu den Werkzeugaufnahmen und dem dort befindlichen Biegewerkzeug 4 verhindert ist. Bei diesem Ausführungsbeispiel ist der obere Pressbalken 16 relativ bezüglich dem unteren Pressbalken 13 zur Durchführung des Biegevorgangs verstellbar. Zum Werkzeugwechsel wird der obere Pressbalken 16 weiter vom unteren Pressbalken 13 distanziert angeordnet, wie dies hinlänglich bekannt ist.

Zumeist erfolgt der Werkzeugwechsel auf der Hinterseite der Pressbalken 13, 16 mittels einer vereinfacht angedeuteten Werkzeug-Manipulationseinheit 30. Dadurch kann der Bediener sehr nahe in den Frontbereich der Biegepresse 3 und somit in den Bereich des Biegewerkzeugs 4 kommen, wodurch bei Unachtsamkeit eine Verletzung durch bewegte Werkzeugkomponenten oder die Werkzeug-Manipulationseinheit 30 verursacht werden können. Die Werkzeug-Manipulationseinheit 30 dient zum Verbringen des Biegewerkzeugs 4 zwischen den Werkzeugaufnahmen 19, 20 und einem Werkzeugspeicher 31 oder zur Positionsveränderung des Biegewerkzeugs 4 relativ bezüglich deren Lage an den Werkzeugaufnahmen 19, 20.

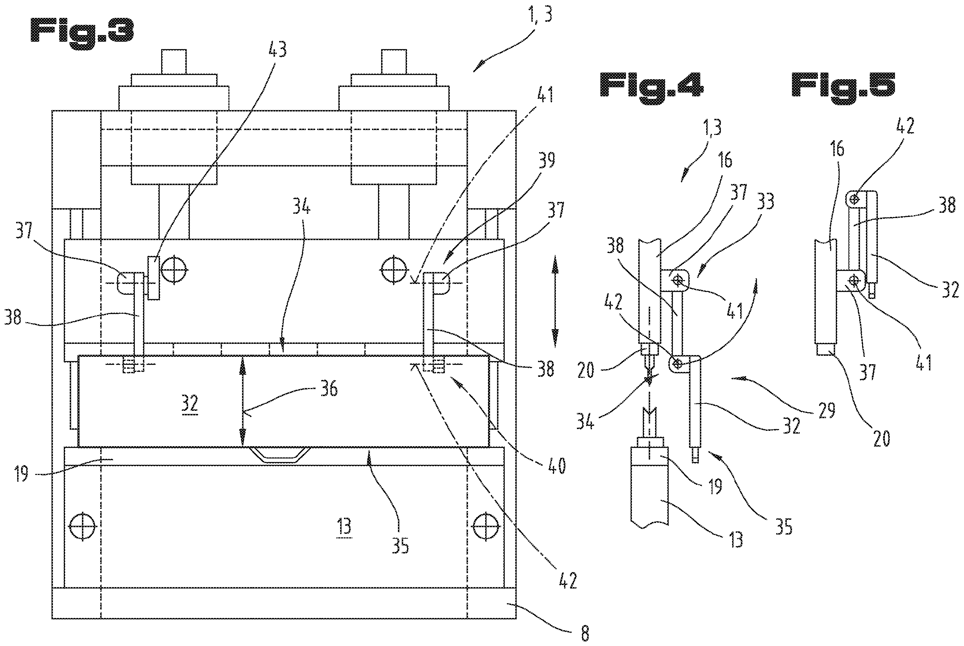

Die Schutzeinheit 29 umfasst zumindest ein plattenförmig ausgebildetes Schutzelement 32. Zumeist ist dieses aus einem durchscheinenden oder durchsichtigen Werkstoff, insbesondere aus einem Kunststoff, gebildet. Das Schutzelement 32 ist in den beiden Fig. 1 und 2 jeweils dem zweiten oder oberen Pressbalken 16 unmittelbar vorgeordnet, wobei dieses in einer sogenannten Freigabestellung in beiden Figuren in strich-punktierten Linien dargestellt ist. Weiters ist das Schutzelement 32 in der Fig. 1 auch noch in einer sogenannten Schutzstellung in vollen Linien dargestellt. Auf die detaillierte Darstellung der Halterung, der Lagerung und eines möglichen Verstellmechanismus desselben an der Biegepresse 3, insbesondere an dem zweiten oder oberen Pressbalken 16, wird dabei verzichtet, wobei in den nachfolgenden Fig. 3 bis 5 sowie 6 und 7 einige mögliche Ausbildungen dazu dargestellt und näher erläutert werden. Unter der Freigabestellung wird hier verstanden, dass das Schutzelement 32 einen freien Zugang zu dem an den Pressbalken 13, 16 gehaltenen Biegewerkzeug 4 ermöglicht.

Die Schutzstellung ist dann gegeben, wenn das zumindest eine Schutzelement 32 bei zumindest bereichsweise oder auch vollständig voneinander distanziert angeordneten Biegestempel 5 und Biegegesenk 6 einen Zugang ausgehend von der Bedienseite oder Zufuhrseite soweit abdeckt oder absichert, dass eine Bedienperson bei einem Werkzeugwechsel des Biegewerkzeugs 4 nicht zwischen die geöffneten und voneinander distanziert angeordneten Pressbalken 13, 16 hineinlangen kann. Der Werkzeugwechsel kann bevorzugt automatisiert erfolgen, wobei dies zumeist in jenem hinterhalb der Bedienseite befindlichen Bereich des Maschinengestells 7 erfolgt. Die Durchführung des Werkzeugwechsels kann z.B. mittels der Werkzeug-Manipulationseinheit 30, insbesondere eines eigenen Manipulators und/oder einer Hinteranschlageinheit, erfolgen, wie dies hinlänglich bekannt ist.

Befindet sich das zumindest eine Schutzelement 32 in seiner Freigabestellung, in welcher üblicher Weise der oder die Biegevorgänge durchgeführt werden, ist zumindest im Bereich des Biegewerkzeugs 4 ein ausreichender Manipulationsraum frei von Störkonturen zu halten. Eine Störkontur kann von einem Anlagenteil oder einer Maschinenkomponente ausgebildet werden, welche in den zur Durchführung des Biegevorgangs benötigten Arbeitsraum hineinragt und diesen somit vermindert und damit einschränkt.

Die Verstellung oder Verlagerung des zumindest einen Schutzelements 32 kann mittels einer in den Fig. 1 und 2 nicht näher dargestellten Verstellvorrichtung 33 erfolgen. Mit dieser Verstellvorrichtung 33 kann das zumindest eine Schutzelement 32 relativ bezüglich der Biegepresse 3 von einer das Biegewerkzeug 4 zumindest bereichsweise, bevorzugt vollständig abdeckenden Schutzstellung in eine das Biegewerkzeug 4 zumindest bereichsweise, bevorzugt vollständig freigebende Freigabestellung verlagert werden. Die Verlagerung kann nur manuell oder aber auch mittels eines eigenen Antriebsmittels erfolgen.

Das plattenförmig ausgebildete Schutzelement 32 weist in Richtung seiner Längserstreckung verlaufend angeordnet einen ersten Längsrand 34 sowie einen zweiten Längsrand 35 auf. Die beiden Längsränder 34, 35 definieren eine Breite 36 des Schutzelements 32. Die Breite 36 kann auch als Querabstand bezeichnet werden, welcher in senkrechter Richtung bezüglich der zumeist parallel zueinander verlaufenden Längsränder 34, 35 ermittelt wird. Die Längserstreckung des Schutzelements 32 ist bevorzugt so gewählt, dass diese in etwa einer Längserstreckung der Pressbalken 13, 16 oder der daran angeordneten Werkzeugaufnahmen 19, 20 entspricht. Die Schutzeinheit 29, insbesondere das zumindest eine Schutzelement 32 sowie die Verstellvorrichtung 33, ist oder sind in einem Zufuhrbereich vor der Biegepresse 3 angeordnet. Damit erfolgt die Anordnung Frontseitig bezüglich der Biegepresse 3. Bei den nachfolgend näher beschriebenen möglichen Ausbildungen ist die Schutzeinheit 29 am oberen Pressbalken 16 gehalten. Damit wird auch bei einer Verstellung des oberen Pressbalkens 16 die Schutzeinheit 29 mitbewegt.

In den Fig. 3 bis 5 ist eine erste mögliche und gegebenenfalls für sich eigenständige Ausführungsform der Schutzeinheit 29 gezeigt, wobei für gleiche Teile gleiche Bezugszeichen bzw. Bauteilbezeichnungen wie in den vorangegangenen Fig. 1 und 2 verwendet werden. Um unnötige Wiederholungen zu vermeiden, wird auf die detaillierte Beschreibung in den vorangegangenen Fig. 1 und 2 hingewiesen bzw. Bezug genommen.

Der besseren Übersichtlichkeit halber sind die beiden Pressbalken 13, 16 nur mehr teilweise angedeutet. Die Verstellvorrichtung 33 ist weiters nur vereinfacht und stilisiert dargestellt.

Die Verstellvorrichtung 33 umfasst zumindest zwei Konsolen 37 und bevorzugt die gleiche Anzahl an Haltearmen 38 - im vorliegenden Beispiel ebenfalls zumindest zwei Haltearme 38. Der Haltearm 38 kann auch als Hebelarm oder Schwenkarm bezeichnet werden. Jeder der Haltearme 38 weist einen ersten Endbereich 39 und einen in seiner Längserstreckung davon distanziert angeordneten zweiten Endbereich 40 auf. Jede der Konsolen 37 ist z.B. am Maschinengestell 7 der Biegepresse 3, insbesondere jedoch am oberen Pressbalken 16 der Biegepresse 3 angeordnet, insbesondere mit diesem feststehend verbunden, und in Richtung der Längserstreckung des zumindest einen Schutzelements 32 voneinander distanziert angeordnet.

Jeder der Haltearme 38 ist mit seinem ersten Endbereich 39 jeweils an einer der Konsolen 37 gelenkig gelagert, wodurch jeweils eine erste Lagerstelle ausgebildet ist. Weiters ist jeder der Haltearme 38 mit seinem zweiten Endbereich 40 mit dem zumindest einen Schutzelement 32 an dem vom ersten Pressbalken 13 abgewendeten ersten Längsrand 34 gelenkig verbunden, wodurch jeweils eine zweite Lagerstelle ausgebildet ist. Durch diese gelenkigen Verbindungen können einerseits die Haltearme 38 um die jeweilige Konsole 37 verschwenkt werden und andererseits das zumindest eine Schutzelement 32 bevorzugt in einer stets hängenden Anordnung mitverstellt werden.

Die zuvor beschriebene Breite 36 des zumindest einen Schutzelements 32 zwischen seinen beiden Längsrändern 34, 35 entspricht in etwa einer Öffnungsweite zwischen den Werkzeugaufnahmen 19, 20 bei vollständig geöffnetem Biegewerkzeug 4. Damit kann bei maximal hochgestellter Stellung der oberen Pressbalkens 16 stets eine sichere Abdeckung des Zwischenraumes zwischen den beiden Werkzeugaufnahmen 19, 20 erzielt werden.

Durch die jeweilige gelenkige Lagerung der Haltearme 38 an den Konsolen 37 können die Haltearme 38 mitsamt des zumindest einen Schutzelements 32 von der Schutzstellung des Schutzelements 32 in die Freigabestellung des Schutzelements 32 verlagert, insbesondere verschwenkt, werden. Die Konsolen 37 bilden parallel bezüglich der Längserstreckung des oberen Pressbalkens 16 sowie fluchtend zueinander ausgerichtete erste Schwenkachsen 41 aus. Die Verschwenkung jedes Haltearms 38 erfolgt in einer senkrecht bezüglich der Schwenkachsen 41 ausgerichteten Schwenkebene. So können die zumindest zwei Haltearme 38 zwischen der Schutzstellung und der Freigabestellung des zumindest einen Schutzelements 32 jeweils um einen Schwenkwinkel mit einem Wert ausgewählt aus einem Winkelbereich mit einer unteren Grenze von 150° und einer oberen Grenze von 200°, insbesondere 180°, verschwenkt werden.

Bei in der Schutzstellung befindlichem Schutzelement 32 sind die Haltearme 38 bevorzugt hängend und somit lotrecht an den Konsolen 37 gehalten und ragen in Richtung auf den unteren Pressbalken 13. In der Freigabestellung des Schutzelements 32 ragen diese auf die vom unteren Pressbalken 13 abgewendete Seite nach oben. Das zumindest eine Schutzelement 32 ist in der Freigabestellung auf der vom oberen Pressbalken 16 abgewendeten Seite der Haltearme 38 sowie in Richtung auf den unteren Pressbalken 13 hängend an den Haltearmen 38 angeordnet.

In der Schutzstellung weisen sowohl die Haltearme 38 ausgehend von den Konsolen 37 als auch das zumindest eine mit den Haltearmen 38 gelenkig verbundene Schutzelement 32 eine in Richtung auf den unteren Pressbalken 13 hängende Anordnung auf. Unter hängend wird die schwerkraftbedingte Lage verstanden.

Wie zuvor beschrieben, ist zwischen jedem zweiten Endbereich 39 der Haltearme 38 und dem ersten Längsrand 34 des Schutzelements 32 eine zweite Lagerstelle mit zweiten Schwenkachsen 42 ausgebildet.

Bevorzugt entspricht eine Längserstreckung der Haltearme 38 zwischen den beiden Endbereichen 39, 40, insbesondere den jeweils dort ausgebildeten Schwenkachsen 41, 42, jeweils in etwa der Breite 36 des zumindest einen Schutzelements 32 zwischen seinen beiden Längsrändem 34, 35. Es könnte aber auch die Längserstreckung der Haltearme 38 größer oder kleiner als die Breite 36 gewählt werden.

Um einen ausreichenden Freiraum im Bereich des Biegewerkzeugs ohne Störkontor zu schaffen, sind die Konsolen 37 derart am oberen Pressbalken 16 angeordnet sind, dass in der Schutzstellung und bei vollständig geöffnetem Biegewerkzeug 4 der zweite Längsrand 35 des zumindest einen Schutzelements 32 dem unteren Pressbalken 13 zugewendet ist. Das zumindest eine Schutzelement 32 mit seinem zweiten Längsrand 35 erstreckt sich bevorzugt zumindest bis an die untere Werkzeugaufnahme 19. Als günstig hat sich erwiesen, wenn die zumindest zwei Konsolen 37 in einem oberen Endabschnitt des oberen Pressbalkens 16 angeordnet sind.

Zur Erleichterung der Verstellbewegung und/oder deren Durchführung kann auch noch zumindest eine schematisch angedeutete Stell- und/oder Dämpfungsvorrichtung 43 vorgesehen sein. Dabei ist bevorzugt die zumindest eine Stell- und/oder Dämpfungsvorrichtung 43 mit einem der Haltearme 38 wirkverbunden. Zur Dämpfung und/oder Gewichtskompensation könnte z.B. eine Torsionsfeder, eine mit einem Haltearm 38 verbundene und sich hin zum oberen Pressbalken 16 erstreckende Zugfeder oder dgl. vorgesehen sein. Weiters könnte zumindest einer der Haltearme 38 mit einem Drehantrieb zur Winkelverlagerung verbunden sein. Die Stellvorrichtung kann insbesondere zum Gewichtsausgleich für die durchzuführenden Stellbewegungen zwischen der Schutzstellung und der Freigabestellung und vice versa dienen. Damit können für den Bediener die Stellbewegungen kraftmäßig erleichtert werden.

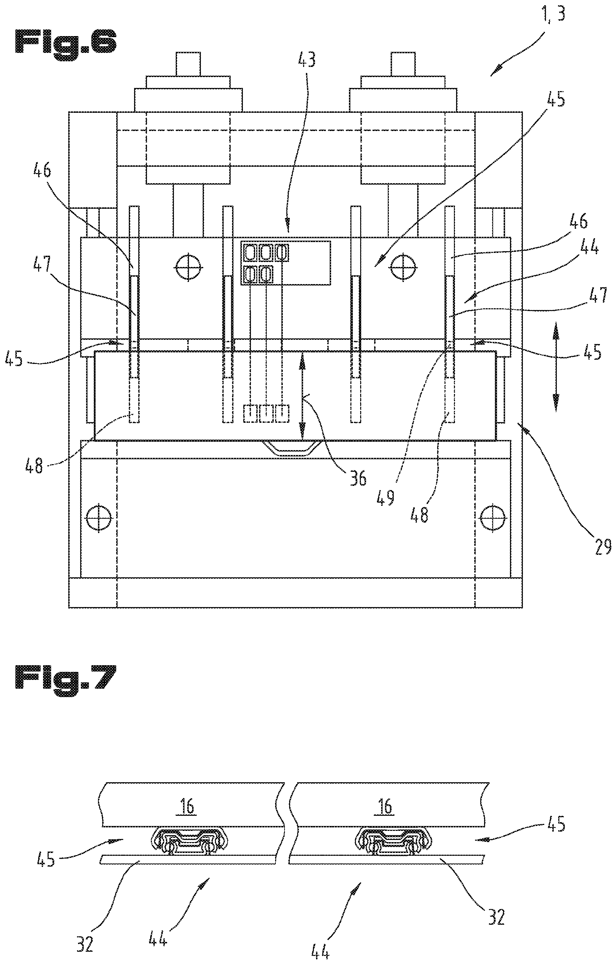

In den Fig. 6 und 7 ist eine weitere mögliche und gegebenenfalls für sich eigenständige Ausführungsform der Schutzeinheit 29 für die Biegemaschine bzw. Biegepresse 3 gezeigt, wobei wiederum für gleiche Teile gleiche Bezugszeichen bzw. Bauteilbezeichnungen wie in den vorangegangenen Fig. 1 bis 5 verwendet werden. Um unnötige Wiederholungen zu vermeiden, wird auf die detaillierte Beschreibung in den vorangegangenen Fig. 1 bis 5 hingewiesen bzw. Bezug genommen. Auch soll hier wiederum ein möglichst langer Verstellweg zwischen der Schutzstellung und der Freigabestellung für das zumindest eine Schutzelement 32 erzielt werden. Damit kann einerseits die Gefahr für den Bediener stark minimiert werden, dass dieser während des Werkzeugwechsels unbeabsichtigt zu dem zu wechselnden oder umzurüstenden Biegewerkzeug 4 greifen kann und andererseits im Biegebetrieb vom Schutzelement 32 keine Störkontur im Bereich des Biegewerkzeugs sowie einem Großteil des oberen Pressbalkens 16 ausgebildet wird.

Bei diesem hier gezeigten Ausführungsbeispiel ist eine andere mögliche Ausbildung einer Verstellvorrichtung 44 für die Schutzeinheit 29 gezeigt, weshalb auch ein zur zuvor beschriebenen Verstellvorrichtung 33 dazu unterschiedliches Bezugszeichen verwendet wird. Der grundsätzliche Verstellweg sowie das zumindest eine Schutzelement 32 kann analog ausgebildet werden, wie dies zuvor beschrieben worden ist.

Hier sind anstatt der Hebelanordnungen mit den Konsolen 37 und den Haltearmen 38 zur Verlängerung des Verstellwegs zwischen der Schutzstellung und der Freigabestellung des Schutzelements 32 mehrere Linearführungsanordnungen 45 vorgesehen. Die Linearführungsanordnungen 45 können auch als Teleskopführungen oder Teleskop-Führungsanordnungen bezeichnet werden. Jede der Linearführungsanordnungen 45 umfasst eine erste Führungsschiene 46, eine zweite Führungsschiene 47 und zumindest eine weitere Führungsschiene 48. Je nach Baulänge der Pressbalken 13, 16 und des zumindest einen Schutzelements 32 sind zumindest zwei der Linearführungsanordnungen 45 je Schutzelement 32 vorzusehen. Weiters sind die zumindest zwei Linearführungsanordnungen 45 in Richtung der Längserstreckung des zumindest einen Schutzelements 32 voneinander distanziert angeordnet.

Es könnten aber anstatt der Führungsschienen auch Teleskopzylinder verwendet werden, welche einen ausreichenden Hub zur Verfügung stellen.

Die ersten Führungsschienen 46 sind z.B. an der Biegepresse 3, insbesondere deren Maschinengestell 7, bevorzugt jedoch jeweils am oberen Pressbalken 16, ortsfest angeordnet, insbesondere daran befestigt. Die zumindest zwei Linearführungsanordnungen 45 sind weiters in vertikaler Ausrichtung am oberen Pressbalken 16 gehalten. Die zumindest eine weitere Führungsschiene 48 ist jeweils am zumindest einen Schutzelement 32 ortsfest angeordnet, insbesondere daran befestigt. Die zweite Führungsschiene 47 ist jeweils unmittelbar nachfolgend an die erste Führungsschiene 46 vorgesehen. Die Führungsschienen sind jeweils aneinander geführt, um so einen definierten Verstellweg durchführen zu können.

Um in der geöffneten Stellung der Pressbalken 13, 16 eine sichere Abdeckung und Schutzstellung zu erzielen, soll ein maximaler Verstellweg der zumindest zwei Linearführungsanordnungen 45 derart gewählt sein, dass in der Schutzstellung und bei vollständig geöffnetem Biegewerkzeug 4 der zweite Längsrand 35 des zumindest einen Schutzelements 32 dem unteren Pressbalken 13 zugewendet ist und sich das zumindest eine Schutzelement 32 mit seinem zweiten Längsrand 35 zumindest bis an die untere Werkzeugaufnahme 19 erstreckt.

Weiters kann es vorteilhaft sein, wenn bei zumindest einer der Linearführungsanordnungen 45 zumindest ein Antriebselement 49 vorgesehen ist. Durch das Vorsehen von zumindest einem Antriebselement 49 kann eine kontrollierte Verstellbewegung zwischen zumindest einzelnen der Führungsschienen 46 und/oder 47 und/oder 48 erzielt werden. So könnte eines der Antriebselemente 49 zwischen der ersten Führungsschiene 46 und der zweiten Führungsschiene 47 vorgesehen sein. Weiters oder zusätzlich dazu könnte eines der Antriebselemente 49 auch zwischen der zweiten Führungsschiene 47 und der zumindest einen weiteren Führungsschiene 48 vorgesehen sein.

Das oder die Antriebselemente 49 kann oder können z.B. zur Durchführung einer Zwangsführung der Verstellbewegung zwischen den einzelnen Führungsschienen dienen. So wäre z.B. ein Riementrieb oder Zahnstangen mit zumindest einem dazwischen angeordneten und in Antriebsverbindung stehenden Zwischenritzel oder Zahnrad denkbar. Wird das Zwischenritzel oder das Zahnrad von einem Antriebsmittel angetrieben, kann eine Antriebsunterstützung oder ein selbsttätiges Verstellen erzielt werden.

Es wäre auch noch möglich, wie dies ebenfalls bereits zuvor beschrieben worden ist, eine Stell- und/oder Dämpfungsvorrichtung 43 vorzusehen. Damit kann ein Gewichtsausgleich z.B. mittels einer Rollfeder oder einer mit Dauerdruck beaufschlagten Zylinder-Kolbenanordnung erzielt werden. Die zumindest eine Stell- und/oder Dämpfungsvorrichtung 43 ist dazu mit dem zumindest einen Schutzelement 32 wirkverbunden.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

**Bezugszeichenaufstellung**

| | | | |
|---|---|---|---|
| 1 | Fertigungsanlage | 31 | Werkzeugspeicher |
| 2 | Werkstück | 32 | Schutzelement |
| 3 | Biegepresse | 33 | Verstellvorrichtung |
| 4 | Biegewerkzeug | 34 | erster Längsrand |
| 5 | Biegestempel | 35 | zweiter Längsrand |
| 6 | Biegegesenk | 36 | Breite |
| 7 | Maschinengestell | 37 | Konsole |
| 8 | Bodenplatte | 38 | Haltearm |
| 9 | Seitenwange | 39 | erster Endbereich |
| 10 | Seitenwange | 40 | zweiter Endbereich |
| 11 | Querverband | 41 | erste Schwenkachse |
| 12 | Frontstirnfläche | 42 | zweite Schwenkachse |
| 13 | Pressbalken | 43 | Stell- und/oder Dämpfungsvorrich-tung |
| 14 | Frontstirnfläche | | |
| 15 | Linearführung | 44 | Verstellvorrichtung |
| 16 | Pressbalken | 45 | Linearführungsanordnung |
| 17 | Stirnfläche | 46 | erste Führungsschiene |
| 18 | Stirnfläche | 47 | zweite Führungsschiene |
| 19 | Werkzeugaufnahme | 48 | weitere Führungsschiene |
| 20 | Werkzeugaufnahme | 49 | Antriebselement |
| 21 | Antriebsanordnung | | |
| 22 | Antriebsmittel | | |
| 23 | Energienetz | | |
| 24 | Steuervorrichtung | | |
| 25 | Eingabeterminal | | |
| 26 | Spindeltrieb | | |
| 27 | Stellmittel | | |
| 28 | Auflagetisch | | |
| 29 | Schutzeinheit | | |
| 30 | Werkzeug-Manipulationseinheit | | |

## Patentansprüche

1. Fertigungsanlage (1), insbesondere für das Freibiegen oder Prägebiegen von einem aus einem Blech zu fertigenden Werkstück (2), umfassend
- eine Biegepresse (3), insbesondere Abkantpresse, mit einem Maschinengestell (7), einem unteren Pressbalken (13), einem oberen Pressbalken (16) sowie an den Pressbalken (13, 16) angeordneten oder ausgebildeten Werkzeugaufnahmen (19, 20),
- zumindest ein Biegewerkzeug (4) mit mindestens einem Biegestempel (5) und mindestens einem Biegegesenk (6),
- eine Werkzeug-Manipulationseinheit (30) zum Verbringen des Biegewerkzeugs (4) zwischen den Werkzeugaufnahmen (19, 20) und einem Werkzeugspeicher (31) oder zur Positionsveränderung des Biegewerkzeugs (4) relativ bezüglich der Werkzeugaufnahmen (19, 20),
- eine Schutzeinheit (29) mit zumindest einem Schutzelement (32) und einer Verstellvorrichtung (33), mittels welcher Verstellvorrichtung (33) das zumindest eine Schutzelement (32) relativ bezüglich der Biegepresse (3) von einer das Biegewerkzeug (4) zumindest bereichsweise abdeckenden Schutzstellung in eine das Biegewerkzeug (4) zumindest bereichsweise freigebende Freigabestellung verlagerbar ist, und das zumindest eine Schutzelement (32) plattenförmig ausgebildet ist und einen ersten Längsrand (34) sowie eine zweiten Längsrand (35) aufweist und von den beiden Längsrändern (34, 35) eine Breite (36) des Schutzelements (32) definiert ist, und wobei die Schutzeinheit (29) in einem Zufuhrbereich vor der Biegepresse (3) angeordnet ist,
**dadurch gekennzeichnet,**
- **dass** die Verstellvorrichtung (33) zumindest zwei Konsolen (37) und zumindest zwei Haltearme (38) mit jeweils einem ersten Endbereich (39) und einem zweiten Endbereich (40) umfasst, und die Haltearme (38) jeweils mit ihren ersten Endbereichen (39) an den Konsolen (37) gelenkig gelagert sind und die Haltearme (38) jeweils mit ihren zweiten Endbereichen (40) mit dem zumindest einen Schutzelement (32) an seinem vom unteren Pressbalken (13) abgewendeten ersten Längsrand (34) gelenkig verbunden sind, und die zumindest zwei Konsolen (37) in Richtung der Längserstreckung des zumindest einen Schutzelements (32) voneinander distanziert angeordnet sind.

2. Fertigungsanlage (1), insbesondere für das Freibiegen oder Prägebiegen von einem aus einem Blech zu fertigenden Werkstück (2), umfassend
- eine Biegepresse (3), insbesondere Abkantpresse, mit einem Maschinengestell (7), einem unteren Pressbalken (13), einem oberen Pressbalken (16) sowie an den Pressbalken (13, 16) angeordneten oder ausgebildeten Werkzeugaufnahmen (19, 20),
- zumindest ein Biegewerkzeug (4) mit mindestens einem Biegestempel (5) und mindestens einem Biegegesenk (6),
- eine Werkzeug-Manipulationseinheit (30) zum Verbringen des Biegewerkzeugs (4) zwischen den Werkzeugaufnahmen (19, 20) und einem Werkzeugspeicher (31) oder zur Positionsveränderung des Biegewerkzeugs (4) relativ bezüglich der Werkzeugaufnahmen (19, 20),
- eine Schutzeinheit (29) mit zumindest einem Schutzelement (32) und einer Verstellvorrichtung (44), mittels welcher Verstellvorrichtung (44) das zumindest eine Schutzelement (32) relativ bezüglich der Biegepresse (3) von einer das Biegewerkzeug (4) zumindest bereichsweise abdeckenden Schutzstellung in eine das Biegewerkzeug (4) zumindest bereichsweise freigebende Freigabestellung verlagerbar ist, und das zumindest eine Schutzelement (32) plattenförmig ausgebildet ist und einen ersten Längsrand (34) sowie eine zweiten Längsrand (35) aufweist und von den beiden Längsrändern (34, 35) eine Breite (36) des Schutzelements (32) definiert ist, und wobei die Schutzeinheit (29) in einem Zufuhrbereich vor der Biegepresse (3) angeordnet ist,
**dadurch gekennzeichnet,**
- **dass** die Verstellvorrichtung (44) zumindest zwei Linearführungsanordnungen (45) umfasst, und jede der Linearführungsanordnungen (45) eine erste Führungsschiene (46) und eine zweite Führungsschiene (47) und zumindest eine weitere Führungsschiene (48) umfasst, und die ersten Führungsschienen (46) jeweils ortsfest an der Biegepresse (3) angeordnet sind, und jeweils die zumindest eine weitere Führungsschiene (48) am zumindest einen Schutzelement (32) befestigt ist, und die zumindest zwei Linearführungsanordnungen (45) in Richtung der Längserstreckung des zumindest einen Schutzelements (32) voneinander distanziert angeordnet sind.

3. Fertigungsanlage (1) nach Anspruch 1, **dadurch gekennzeichnet, dass** die Schutzeinheit (29) am oberen Pressbalken (16) gehalten ist.

4. Fertigungsanlage (1) nach Anspruch 1 oder 3, **dadurch gekennzeichnet, dass** die Breite (36) des zumindest einen Schutzelements (32) zwischen seinen beiden Längsrändern (34, 35) einer Öffnungsweite zwischen den Werkzeugaufnahmen (19, 20) bei vollständig geöffnetem Biegewerkzeug (4) entspricht.

5. Fertigungsanlage (1) nach einem der Ansprüche1, 3 oder 4, **dadurch gekennzeichnet, dass** die zumindest zwei Haltearme (38) zwischen der Schutzstellung und der Freigabestellung des zumindest einen Schutzelements (32) jeweils um einen Schwenkwinkel mit einem Wert ausgewählt aus einem Winkelbereich mit einer unterer Grenze von 150° und einer oberen Grenze von 200°, insbesondere 180°, verschwenkbar sind.

6. Fertigungsanlage (1) nach einem der Ansprüche 1 oder 3 bis 5, **dadurch gekennzeichnet, dass** eine Längserstreckung der Haltearme (38) jeweils in etwa der Breite (36) des zumindest einen Schutzelements (32) zwischen seinen beiden Längsrändern (34, 35) entspricht.

7. Fertigungsanlage (1) nach einem der Ansprüche 1 oder 3 bis 6, **dadurch gekennzeichnet, dass** die Haltearme (38) in der Freigabestellung jeweils ausgehend von den Konsolen (37) auf die vom unteren Pressbalken (13) abgewendete Seite ragen und das zumindest eine Schutzelement (32) auf der vom oberen Pressbalken (16) abgewendeten Seite der Haltearme (38) sowie in Richtung auf den unteren Pressbalken (13) hängend angeordnet ist.

8. Fertigungsanlage (1) nach einem der Ansprüche 1 oder 3 bis 7, **dadurch gekennzeichnet, dass** in der Schutzstellung sowohl die Haltearme (38) ausgehend von den Konsolen (37) als auch das zumindest eine an den Haltearmen (38) gelenkig verbundene Schutzelement (32) eine in Richtung auf den unteren Pressbalken (13) hängende Anordnung aufweisen.

9. Fertigungsanlage (1) nach einem der Ansprüche 1 oder 3 bis 8, **dadurch gekennzeichnet, dass** die Konsolen (37) derart am oberen Pressbalken (16) angeordnet sind, dass in der Schutzstellung und bei vollständig geöffnetem Biegewerkzeug (4) der zweite Längsrand (35) des zumindest einen Schutzelements (32) dem unteren Pressbalken (13) zugewendet ist, und sich das zumindest eine Schutzelement (32) mit seinem zweiten Längsrand (35) zumindest bis an die untere Werkzeugaufnahme (19) erstreckt.

10. Fertigungsanlage (1) nach einem der Ansprüche 1 oder 3 bis 9, **dadurch gekennzeichnet, dass** die zumindest zwei Konsolen (37) in einem oberen Endabschnitt des oberen Pressbalkens (16) angeordnet sind.

11. Fertigungsanlage (1) nach einem der Ansprüche 1 oder 3 bis 10, **dadurch gekennzeichnet, dass** zumindest eine Stell- und/oder Dämpfungsvorrichtung (43) vorgesehen ist, welche zumindest eine Stell- und/oder Dämpfungsvorrichtung (43) mit einem der Haltearme (38) wirkverbunden ist.

12. Fertigungsanlage (1) nach Anspruch 2, **dadurch gekennzeichnet, dass** die Schutzeinheit (29) am oberen Pressbalken (16) gehalten ist.

13. Fertigungsanlage (1) nach Anspruch 2 oder 12, **dadurch gekennzeichnet, dass** die Breite (36) des zumindest einen Schutzelements (32) zwischen seinen beiden Längsrändern (34, 35) einer Öffnungsweite zwischen den Werkzeugaufnahmen (19, 20) bei vollständig geöffnetem Biegewerkzeug (4) entspricht.

14. Fertigungsanlage (1) nach einem der Ansprüche 2, 12 oder 13, **dadurch gekennzeichnet, dass** ein maximaler Verstellweg der zumindest zwei Linearführungsanordnungen (45) derart gewählt ist, dass in der Schutzstellung und bei vollständig geöffnetem Biegewerkzeug (4) der zweite Längsrand (35) des zumindest einen Schutzelements (32) dem unteren Pressbalken (13) zugewendet ist, und sich das zumindest eine Schutzelement (32) mit seinem zweiten Längsrand (35) zumindest bis an die untere Werkzeugaufnahme (19) erstreckt.

15. Fertigungsanlage (1) nach einem der Ansprüche 2 oder 12 bis 14, **dadurch gekennzeichnet, dass** die zumindest zwei Linearführungsanordnungen (45) in vertikaler Ausrichtung am oberen Pressbalken (16) gehalten sind.

16. Fertigungsanlage (1) nach einem der Ansprüche 2 oder 12 bis 15, **dadurch gekennzeichnet, dass** bei zumindest einer der Linearführungsanordnungen (45) zumindest ein Antriebselement (49) vorgesehen ist.

17. Fertigungsanlage (1) nach Anspruch 16, **dadurch gekennzeichnet, dass** eines der Antriebselemente (49) zwischen der ersten Führungsschiene (46) und der zweiten Führungsschiene (47) vorgesehen ist.

18. Fertigungsanlage (1) nach Anspruch 16 oder 17, **dadurch gekennzeichnet, dass** eines der Antriebselemente (49) zwischen der zweiten Führungsschiene (47) und der zumindest einen weiteren Führungsschiene (48) vorgesehen ist.

19. Fertigungsanlage (1) nach einem der Ansprüche 2 oder 12 bis 18, **dadurch gekennzeichnet, dass** zumindest eine Stell- und/oder Dämpfungsvorrichtung (43) vorgesehen ist, welche zumindest eine Stell- und/oder Dämpfungsvorrichtung (43) mit dem zumindest einen Schutzelement (32) wirkverbunden ist.

## Claims

1. A production plant (1), in particular for air bending or bottom bending of a workpiece (2) to be manufactured from a sheet metal, comprising
- a bending press (3), in particular a press brake, with a machine frame (7), a lower press beam (13), an upper press beam (16) as well as tool holders (19, 20) arranged or formed on the press beams (13, 16),
- at least one bending tool (4) with at least one bending punch (5) and at least one bending die (6),
- a tool manipulation unit (30) for moving the bending tool (4) between the tool holders (19, 20) and a tool storage (31) or for changing the position of the bending tool (4) relative to the tool holders (19, 20),
- a protective unit (29) with at least one protective element (32) and an adjusting device (33), by means of which adjusting device (33) the at least one protective element (32) can be displaced relative to the bending press (3) from a protective position which at least sectionally covers the bending tool (4) into a release position which at least sectionally releases the bending tool (4), and the at least one protective element (32) is formed to be plate-shaped and comprises a first longitudinal edge (34) as well as a second longitudinal edge (35) and a width (36) of the protective element (32) is defined by the two longitudinal edges (34, 35), and wherein the protective unit (29) is arranged in a feed region in front of the bending press (3),
**characterized in that**
- the adjusting device (33) comprises at least two brackets (37) and at least two holding arms (38) each having a first end region (39) and a second end region (40), and the holding arms (38) are each mounted on the brackets (37) in an articulated manner with their first end regions (39), and the holding arms (38) are each connected to the at least one protective element (32) on its first longitudinal edge (34) facing away from the first press beam (13) in an articulated manner with their second end regions (40), and the at least two brackets (37) are arranged at a distance from one another in the direction of the longitudinal extent of the at least one protective element (32).

2. The production plant (1), in particular for air bending or bottom bending of a workpiece (2) to be manufactured from a sheet metal, comprising
- a bending press (3), in particular a press brake, with a machine frame (7), a lower press beam (13), an upper press beam (16) as well as tool holders (19, 20) arranged or formed on the press beams (13, 16),
- at least one bending tool (4) with at least one bending punch (5) and at least one bending die (6),
- a tool manipulation unit (30) for moving the bending tool (4) between the tool holders (19, 20) and a tool storage (31) or for changing the position of the bending tool (4) relative to the tool holders (19, 20),
- a protective unit (29) with at least one protective element (32) and an adjusting device (44), by means of which adjusting device (44) the at least one protective element (32) can be displaced relative to the bending press (3) from a protective position which at least sectionally covers the bending tool (4) into a release position which at least sectionally releases the bending tool (4), and the at least one protective element (32) is formed to be plate-shaped and comprises a first longitudinal edge (34) as well as a second longitudinal edge (35) and a width (36) of the protective element (32) is defined by the two longitudinal edges (34, 35), and wherein the protective unit (29) is arranged in a feed region in front of the bending press (3),
**characterized in that**
- the adjusting device (44) comprises at least two linear guide arrangements (45), and each of the linear guide arrangements (45) comprises a first guide rail (46) and a second guide rail (47) and at least one further guide rail (48), and the first guide rails (46) are each arranged stationarily on the bending press (3), and each of the at least one further guide rails (48) is mounted on the at least one protective element (32), and the at least two linear guide arrangements (45) are arranged at a distance from one another in the direction of the longitudinal extent of the at least one protective element (32).

3. The production plant (1) according to claim 1, **characterized in that** the protective unit (29) is held on the upper press beam (16).

4. The production installation (1) according to claim 1 or 3, **characterized in that** the width (36) of the at least one protective element (32) between its two longitudinal edges (34, 35) corresponds to an opening width between the tool holders (19, 20) of the completely open bending tool (4).

5. The production installation (1) according to one of claims 1, 3 or 4, **characterized in that** the at least two holding arms (38) are pivotable between the protective position and the release position of the at least one protective element (32), each by a pivot angle with a value selected from an angle range with a lower limit of 150° and an upper limit of 200°, in particular 180°.

6. The production plant (1) according to one of claims 1 or 3 to 5, **characterized in that** a longitudinal extension of the holding arms (38) each approximately corresponds to the width (36) of the at least one protective element (32) between its two longitudinal edges (34, 35).

7. The production plant (1) according to one of claims 1 or 3 to 6, **characterized in that** in the release position, the holding arms (38) each starting out from the brackets (37) project towards the side facing away from the lower press beam (13) and the at least one protective element (32) is arranged so as to be suspended on the side of the holding arms (38) facing away from the upper press beam (16) as well as in the direction towards the lower press beam (13).

8. The production plant (1) according to one of the claims 1 or 3 to 7, **characterized in that** in the protective position, both the holding arms (38) starting out from the brackets (37) and the at least one protective element (32) connected to the holding arms (38) in an articulated manner comprise a suspended arrangement in the direction towards the lower press beam (13).

9. The production plant (1) according to one of claims 1 or 3 to 8, **characterized in that** the brackets (37) are arranged on the upper press beam (16) such that in the protective position and with the bending tool (4) being completely open, the second longitudinal edge (35) of the at least one protective element (32) faces the lower press beam (13) and the at least one protective element (32) with its second longitudinal edge (35) extends at least to the lower tool holder (19).

10. The production plant (1) according to one of claims 1 or 3 to 9, **characterized in that** the at least two brackets (37) are arranged in an upper end section of the upper press beam (16).

11. The production plant (1) according to one of claims 1 or 3 to 10, **characterized in that** at least one actuator and/or damping device (43) is provided, said at least one actuator and/or damping device (43) being operatively connected to one of the holding arms (38).

12. The production plant (1) according to claim 2, **characterized in that** the protective unit (29) is held on the upper press beam (16).

13. The production installation (1) according to claim 2 or 12, **characterized in that** the width (36) of the at least one protective element (32) between its two longitudinal edges (34, 35) corresponds to an opening width between the tool holders (19, 20) of the completely open bending tool (4).

14. The production plant (1) according to one of claims 2, 12 or 13, **characterized in that** a maximum adjustment track of the at least two linear guide arrangements (45) is selected such that in the protective position and with the bending tool (4) being completely open, the second longitudinal edge (35) of the at least one protective element (32) faces the lower press beam (13) and the at least one protective element (32) with its second longitudinal edge (35) extends at least to the lower tool holder (19).

15. The production plant (1) according or one of claims 2 or 12 to 14, **characterized in that** the at least two linear guide arrangements (45) are held on the upper press beam (16) in vertical orientation.

16. The production plant (1) according to one of claims 2 or 12 to 15, **characterized in that** at least one drive element (49) is provided on at least one of the linear guide arrangements (45).

17. The production plant (1) according to claim 16, **characterized in that** one of the drive elements (49) is provided between the first guide rail (46) and the second guide rail (47).

18. The production plant (1) according to claim 16 or 17, **characterized in that** one of the drive elements (49) is provided between the second guide rail (47) and the at least one further guide rail (48).

19. The production plant (1) according to one of claims 2 or 12 to 18, **characterized in that** at least one actuator and/or damping device (43) is provided, said at least one actuator and/or damping device (43) being operatively connected to the at least one protective element (32).

## Revendications

1. Installation de fabrication (1), plus particulièrement pour le pliage libre ou l'estampage d'une pièce (2) à fabriquer à partir d'une tôle, comprenant
- une presse de cintrage (3), plus particulièrement une presse plieuse, avec un châssis de machine (7), une barre de presse inférieure (13), une barre de presse supérieure (16) ainsi que des porte-outils (19, 20), disposés ou réalisés au niveau des barres de presse (13, 16),
- au moins un outil de cintrage (4) avec au moins un poinçon de cintrage (5) et au moins une matrice de cintrage (6),
- une unité de manipulation d'outil (30) pour le déplacement de l'outil de cintrage (4) entre les porte-outils (19, 20) et un magasin d'outils (31) ou pour le changement de position de l'outil de cintrage (4) par rapport aux porte-outils (19, 20),
- une unité de protection (29) avec au moins un élément de protection (32) et un dispositif de réglage (33), l'au moins un élément de protection (32) pouvant être déplacé au moyen de ce dispositif de réglage (33) par rapport à la presse de cintrage (3), d'une position de protection recouvrant l'outil de cintrage (4) au moins à certains endroits vers une position de libération dégageant l'outil de cintrage (4) au moins à certains endroits, et l'au moins un élément de protection (32) présente la forme d'une plaque et comprend un premier bord longitudinal (34) ainsi qu'un deuxième bord longitudinal (35) et une largeur (36) de l'élément de protection (32) est définie par les deux bords longitudinaux (34, 35) et dans lequel l'unité de protection (29) est disposée dans une partie d'introduction devant la presse de cintrage (3),
**caractérisée en ce que**
- le dispositif de réglage (33) comprend au moins deux consoles (37) et au moins deux bras de maintien (38) avec chacun une première partie d'extrémité (39) et une deuxième partie d'extrémité (40) et les bras de maintien (38) sont logés, avec leurs premières parties d'extrémité (39) respectives, de manière articulée au niveau des consoles (37) et les bras de maintien (38) sont reliés de manière articulée, au niveau de leurs deuxièmes parties d'extrémité (40) respectives, avec l'au moins un élément de protection (32) au niveau de son premier bord longitudinal (34) opposé à la barre de presse inférieure (13), et les au moins deux consoles (37) sont disposées de manière distante entre elles dans la direction de l'extension longitudinale de l'au moins un élément de protection (32).

2. Installation de fabrication (1), plus particulièrement pour le pliage libre ou l'estampage d'une pièce (2) à fabriquer à partir d'une tôle, comprenant
- une presse de cintrage (3), plus particulièrement une presse plieuse, avec un châssis de machine (7), une barre de presse inférieure (13), une barre de presse supérieure (16) ainsi que des porte-outils (19, 20), disposés ou réalisés au niveau des barres de presse (13, 16),
- au moins un outil de cintrage (4) avec au moins un poinçon de cintrage (5) et au moins une matrice de cintrage (6),
- une unité de manipulation d'outil (30) pour le déplacement de l'outil de cintrage (4) entre les porte-outils (19, 20) et un magasin d'outils (31) ou pour le changement de position de l'outil de cintrage (4) par rapport aux porte-outils (19, 20),
- une unité de protection (29) avec au moins un élément de protection (32) et un dispositif de réglage (44), l'au moins un élément de protection (32) pouvant être déplacé au moyen de ce dispositif de réglage (44) par rapport à la presse de cintrage (3), d'une position de protection recouvrant l'outil de cintrage (4) au moins à certains endroits vers une position de libération dégageant l'outil de cintrage (4) au moins à certains endroits, et l'au moins un élément de protection (32) présente la forme d'une plaque et comprend un premier bord longitudinal (34) ainsi qu'un deuxième bord longitudinal (35) et une largeur (36) de l'élément de protection (32) est définie par les deux bords longitudinaux (34, 35) et dans lequel l'unité de protection (29) est disposée dans une partie d'introduction devant la presse de cintrage (3),
**caractérisée en ce que**
- le dispositif de réglage (44) comprend au moins deux dispositifs de guidage linéaire (45) et chacun des dispositifs de guidage linéaire (45) comprend un premier rail de guidage (46) et un deuxième rail de guidage (47) et au moins un autre rail de guidage (48), et les premiers rails de guidage (46) sont disposés chacun de manière fixe sur la presse de cintrage (3) et l'au moins un autre rail de guidage (48) est fixé à l'au moins un élément de protection (32) et les au moins deux dispositifs de guidage linéaire (45) sont disposés de manière distante entre eux dans la direction de l'extension longitudinale de l'au moins un élément de protection (32).

3. Installation de fabrication (1) selon la revendication 1, **caractérisée en ce que** l'unité de protection (29) est maintenue au niveau de la barre de presse supérieure (16).

4. Installation de fabrication (1) selon la revendication 1 ou 3, **caractérisée en ce que** la largeur (36) de l'au moins un élément de protection (32) entre ses deux bords longitudinaux (34, 35) correspond à une largeur d'ouverture entre les porte-outils (19, 20) lorsque l'outil de cintrage (4) est entièrement ouvert.

5. Installation de fabrication (1) selon l'une des revendications 1, 3 ou 4, **caractérisée en ce que** les au moins deux bras de maintien (38) peuvent être pivotés entre la position de protection et la position de libération de l'au moins un élément de protection (32) respectivement d'un angle de pivotement avec une valeur sélectionnée dans une plage angulaire avec une limite inférieure de 150° et une limite supérieure de 200°, plus particulièrement 180°.

6. Installation de fabrication (1) selon l'une des revendications 1 ou 3 à 5, **caractérisée en ce qu'**une extension longitudinale des bras de maintien (38) correspond respectivement environ à la largeur (36) de l'au moins un élément de protection (32) entre ses deux bords longitudinaux (34, 35).

7. Installation de fabrication (1) selon l'une des revendications 1 ou 3 à 6, **caractérisée en ce que**, dans la position de libération, les bras de maintien (38) s'étendent respectivement à partir des consoles (37) vers le côté opposé à la barre de presse inférieure (13) et l'au moins un élément de protection (32) est disposé de manière suspendue sur le côté des bras de maintien (38) opposé à la barre de presse supérieure (16) ainsi que dans la direction de la barre de presse inférieure (13).

8. Installation de fabrication (1) selon l'une des revendications 1 ou 3 à 7, **caractérisée en ce que**, dans la position de protection, les bras de maintien (38), à partir des consoles (37), ainsi que l'au moins un élément de protection (32) relié de manière articulée aux bras de maintien (38) présentent une disposition suspendue dans la direction de la barre de presse inférieure (13).

9. Installation de fabrication (1) selon l'une des revendications 1 ou 3 à 8, **caractérisée en ce que** les consoles (37) sont disposées sur la barre de presse supérieure (16) de façon à ce que, dans la position de protection et lorsque l'outil de cintrage (4) est entièrement ouvert, le deuxième bord longitudinal (35) de l'au moins un élément de protection (32) soit orienté vers la barre de presse inférieure (13) et à ce que l'au moins un élément de protection (32) s'étende, avec son deuxième bord longitudinal (35), au moins jusqu'au porte-outil inférieur (19).

10. Installation de fabrication (1) selon l'une des revendications 1 ou 3 à 9, **caractérisée en ce que** les au moins deux consoles (37) sont disposées dans une portion d'extrémité supérieure de la barre de presse supérieure (16).

11. Installation de fabrication (1) selon l'une des revendications 1 ou 3 à 10, **caractérisée en ce qu'**au moins un dispositif de réglage et/ou d'amortissement (43) est prévu, ce dispositif de réglage et/ou d'amortissement (43) étant relié de manière fonctionnelle avec un des bras de maintien (38).

12. Installation de fabrication (1) selon la revendication 2, **caractérisée en ce que** l'unité de protection (29) est maintenue sur la barre de presse supérieure (16).

13. Installation de fabrication (1) selon la revendication 2 ou 12, **caractérisée en ce que** la largeur (36) de l'au moins un élément de protection (32) entre ses deux bords longitudinaux (34, 35) correspond à une largeur d'ouverture entre les porte-outils (19, 20) lorsque l'outil de cintrage (4) est entièrement ouvert.

14. Installation de fabrication (1) selon la revendication 2, 12 ou 13, **caractérisée en ce qu'**une course de réglage maximale des au moins deux dispositifs de guidage linéaire (45) est choisie de façon à ce que, dans la position de protection et lorsque l'outil de cintrage (4) est entièrement ouvert, le deuxième bord longitudinal (35) de l'au moins un élément de protection (32) soit orienté vers la barre de presse inférieure (13) et à ce que l'au moins un élément de protection (32) s'étende, avec son deuxième bord longitudinal (35), au moins jusqu'au porte-outil inférieur (19).

15. Installation de fabrication (1) selon la revendication 2 ou 12 à 14, **caractérisée en ce que** les au moins deux dispositifs de guidage linéaire (45) sont maintenus dans une orientation verticale sur la barre de presse supérieure (16).

16. Installation de fabrication (1) selon la revendication 2 ou 12 à 15, **caractérisée en ce que**, sur au moins un des dispositifs de guidage linéaire (45), est prévu au moins un élément d'entraînement (49).

17. Installation de fabrication (1) selon la revendication 16, **caractérisée en ce qu'**un des éléments d'entraînement (49) est prévu entre le premier rail de guidage (46) et le deuxième rail de guidage (47).

18. Installation de fabrication (1) selon la revendication 16 ou 17, **caractérisée en ce qu'**un des éléments d'entraînement (49) est prévu entre le deuxième rail de guidage (47) et l'au moins un autre rail de guidage (48).

19. Installation de fabrication (1) selon la revendication 2 ou 12 à 18, **caractérisée en ce qu'**au moins un dispositif de réglage et/ou d'amortissement (43) est prévu, ce dispositif de réglage et/ou d'amortissement (43) étant relié de manière fonctionnelle avec l'au moins un élément de protection (32).
